# EUROPEAN PATENT APPLICATION

(11) **EP 4 412 219 A1**
(43) Date of publication of application: **07.08.2024**
(21) Application number: 22875157.4
(22) Date of filing: 30.09.2022
(51) Int. Cl.: H04N 19/91, H04N 19/189

(54) **ENCODING METHOD AND APPARATUS, DECODING METHOD AND APPARATUS, DEVICE, AND READABLE STORAGE MEDIUM**

(30) Priority: 30.09.2021 CN 202111163092
(71) Applicant: Migu Co., Ltd., Beijing 100032 (CN); China Mobile Communications Group Co., Ltd., Beijing 100032 (CN); Peking University, Beijing 100871 (CN)
(72) Inventor: FENG, Yanan, Beijing 100032 (CN); LI, Lin, Beijing 100032 (CN); ZHOU, Bing, Beijing 100032 (CN); XU, Song, Beijing 100032 (CN); XING, Gang, Beijing 100032 (CN); JIA, Chuanmin, Beijing 100032 (CN); GE, Ziqing, Beijing 100032 (CN); WANG, Shanshe, Beijing 100032 (CN); MA, Siwei, Beijing 100032 (CN)
(74) Representative: GPI Brevets
(86) International application number: PCT/CN2022/123194
(87) International publication number: WO 2023/051776

(57) **Abstract**

The present disclosure provides an encoding method, an encoding apparatus, a decoding method, a decoding apparatus, a device and a readable storage medium, and it relates to the field of communication technology, so as to increase an encoding speed and a decoding speed. The encoding method includes: obtaining a feature image of a to-be-encoded image; obtaining a codebook range scaling factor in accordance with the feature image; obtaining a content-adaptive priori codebook range for each channel of the feature image in accordance with the codebook range scaling factor and a channel-adaptive priori codebook range for each channel; and performing entropy encoding on a target channel in accordance with an actual symbol range for the target channel of the feature image and a content-adaptive priori codebook range for the target channel, so as to form an encoded stream. The target channel is any channel of the feature image.

## Description

### CROSS-REFERENCE TO RELATED APPLICATION

This application claims a priority of the Chinese patent application No. 202111163092.1 filed on September 30, 2021 by Migu Co., LTD, China Mobile Communications Group Co., LTD, and Peking University, and entitled "encoding method and apparatus, decoding method and apparatus, device and readable storage medium", which is incorporated herein by reference in its entirety.

### TECHNICAL FIELD

The present disclosure relates to the field of communication technology, in particular to an encoding method, an encoding apparatus, a decoding method, a decoding apparatus, a device, and a readable storage medium.

### BACKGROUND

Recently, an image compression technique based on a fully-connected neural network has become a research trend. For a majority of deep-learning image compression methods, a maximum value and a minimum value of an entire hidden variable are used to determine a codebook range in an entropy encoding algorithm. However, values in channels of the hidden variable are distributed in different ways, and the values in most of the channels are small, so an encoding/decoding speed is adversely affected in the case of a large codebook range.

### SUMMARY

An object of the present disclosure is to provide an encoding method, an encoding apparatus, a decoding method, a decoding apparatus, a device, and a readable storage medium, so as to increase an encoding speed and a decoding speed.

In one aspect, the present disclosure provides in some embodiments an encoding method, including: obtaining a feature image of a to-be-encoded image; obtaining a codebook range scaling factor in accordance with the feature image; obtaining a content-adaptive priori codebook range for each channel of the feature image in accordance with the codebook range scaling factor and a channel-adaptive priori codebook range for each channel; and performing entropy encoding on a target channel in accordance with an actual symbol range for the target channel of the feature image and a content-adaptive priori codebook range for the target channel, so as to form an encoded stream. The target channel is any channel of the feature image.

In another aspect, the present disclosure provides in some embodiments a decoding method, including: obtaining an encoded stream; determining a decoding codebook range in accordance with information in the encoded stream; and performing entropy decoding on the encoded stream in accordance with the decoding codebook range. The decoding codebook range includes an actual symbol range for a channel or a content-adaptive priori codebook range for the channel.

In yet another aspect, the present disclosure provides in some embodiments an encoding apparatus, including: a first obtaining module configured to obtain a feature image of a to-be-encoded image; a second obtaining module configured to obtain a codebook range scaling factor in accordance with the feature image; a third obtaining module configured to obtain a content-adaptive priori codebook range for each channel of the feature image in accordance with the codebook range scaling factor and a channel-adaptive priori codebook range for each channel; and a first encoding module configured to perform entropy encoding on a target channel in accordance with an actual symbol range for the target channel of the feature image and a content-adaptive priori codebook range for the target channel, so as to form an encoded stream. The target channel is any channel of the feature image.

In still yet another aspect, the present disclosure provides in some embodiments a decoding apparatus, including: a fourth obtaining module configured to obtain an encoded stream; a first determination module configured to determine a decoding codebook range in accordance with information in the encoded stream; and a first decoding module configured to perform entropy decoding on the encoded stream in accordance with the decoding codebook range. The decoding codebook range includes an actual symbol range for a channel or a content-adaptive priori codebook range for the channel.

In still yet another aspect, the present disclosure provides in some embodiments an electronic device, including a transceiver, a memory, a processor, and a program stored in the memory and executed by the processor. The processor is configured to execute the program so as to implement the above-mentioned encoding method or decoding method.

In still yet another aspect, the present disclosure provides in some embodiments a readable storage medium storing therein a program. The program is executed by a processor so as to implement the above-mentioned encoding method or decoding method.

According to the embodiments of the present disclosure, at an encoding end, the codebook range scaling factor is obtained in accordance with the feature image of the to-be-encoded image, and the content-adaptive priori codebook range for each channel of the feature image is obtained in accordance with the codebook range scaling factor and the channel-adaptive priori codebook range for each channel, so as to form the encoded stream. The content-adaptive priori codebook range is obtained through scaling the channel-adaptive priori codebook range for each channel, so when encoding each channel, each channel is encoded using a codebook range adapted to the channel, so it is able to increase an encoding speed. Correspondingly, at a decoding end, the decoding codebook range is determined, and each channel is decoded in accordance with the actual symbol range for the channel or the content-adaptive priori codebook range for the channel, so it is able to increase a decoding speed.

### BRIEF DESCRIPTION OF THE DRAWINGS

FIG. 1 is a flow chart of an encoding method according to one embodiment of the present disclosure;
FIG. 2 is a flow chart of a decoding method according to one embodiment of the present disclosure;
FIG. 3 is a schematic view showing an encoding apparatus according to one embodiment of the present disclosure; and
FIG. 4 is a schematic view showing a decoding apparatus according to one embodiment of the present disclosure.

### DETAILED DESCRIPTION

The expression "and/or" in the embodiments of the present disclosure may be merely used to describe the relationship between objects, and it may include three relationships. For example, "A and/or B" may represent that, there is only A, there are both A and B, and there is only B. Further, the symbol "/" usually refers to "or".

The expression "a plurality of" refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

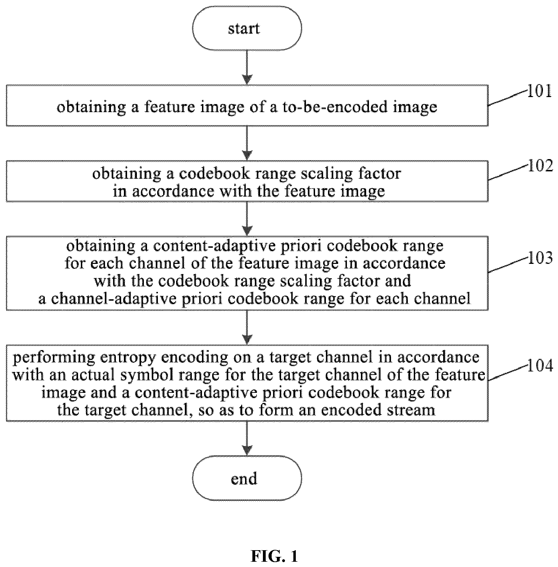

As shown in FIG. 1, the present disclosure provides in some embodiments an encoding method, which includes the following steps.

Step 101: obtaining a feature image of a to-be-encoded image.

For example, in this step, the to-be-encoded image is split into a plurality of sub-blocks each having size of M*N, where M and N are a length and a width of each sub-block respectively, and M and N are greater than 0. Then, the sub-blocks are inputted into an encoding sub-network, so as to obtain the feature image. In the embodiments of the present disclosure, M and N are 512 respectively. Usually, after the to-be-encoded image is split, there may exist remaining pixels. In order to ensure the encoding accuracy and the information integrity, when there are remaining pixels after splitting the to-be-encoded image into the plurality of sub-blocks, the remaining pixels are completed with zeros(0s), so as to obtain the completed sub-blocks. A length and a width of each completed sub-block are each a multiple of 64. In this case, the plurality of sub-blocks and the completed sub-blocks are inputted into the encoding sub-network, so as to obtain the feature image.

The encoding sub-network is a network structure for processing the plurality of sub-blocks to generate a feature map. In a possible embodiment of the present disclosure, when the feature image is generated in accordance with the plurality of blocks, a convolution parameter is determined, and the convolution parameter is mapped to a convolutional kernel in the encoding sub-network, so as to generate a parameter-associated convolutional kernel. Finally, the plurality of sub-blocks is multiplied one by one with the parameter-associated convolutional kernel, so as to generate a feature map corresponding to each sub-block.

Step 102: obtaining a codebook range scaling factor in accordance with the feature image.

In the embodiments of the present disclosure, the codebook range scaling factor is used to scale a channel-adaptive priori codebook range for each channel, so as to obtain a content-adaptive priori codebook range for the channel.

Here, the channel-adaptive priori codebook range for each channel is obtained in advance or during the execution.

For example, pre-experiment is performed on a fully-connected neural network model at each code rate using a training set having a certain size (e.g., 800 training images each having a size of 256*256), and a maximum value and a minimum value of symbols in the training sets for each channel of the model are obtained through traversing, so as to obtain the channel-adaptive priori codebook range for each channel.

In this step, the codebook range scaling factor is calculated as follows.

S1: for an i^{th} judgment, an actual symbol range for each channel of the feature image is compared with t times of a channel-adaptive priori codebook range, so as to obtain a first parameter n, where n represents the quantity of channels for which the actual symbol range is greater than t times of the corresponding channel-adaptive priori codebook range in the feature image, and t is a second parameter.

S2: when n is greater than a predetermined value, a second parameter obtained through an (i-1)^{th} judgment or an initial second parameter is reduced so as to obtain a second parameter outputted through the i^{th} judgment; and when n is smaller than the predetermined value, the second parameter obtained through the (i-1)^{th} judgment or the initial second parameter is increased, so as to obtain the second parameter outputted through the i^{th} judgment. The predetermined value is set according to the practical need, e.g., 20.

When a judgment ending condition is not satisfied, a value of i is incremented by 1, and S1 to S2 are repeated until the judgment ending condition has been satisfied. Then, the second parameter obtained through the last judgment is taken as the codebook range scaling factor, where i is a serial number of a current judgment, and i is an integer and has an initial value of 1. When i=1, t=1. The judgment ending condition includes that the first parameter obtained through the i^{th} judgment is equal to the predetermined value, or i is greater than 3.

For example, in S2, when n is greater than the predetermined value, the second parameter obtained through the i^{th} judgment is calculated through a first formula t = t - *sⁱ*, and when n is smaller than the predetermined value, the second parameter obtained through the i^{th} judgment is calculated through a second formula t = t + *sⁱ*. When i=1, in the first formula, the second parameter outputted through a first judgment is obtained on the basis of the initial second parameter, and in the second formula, the second parameter outputted through the first judgment is obtained on the basis of the initial second parameter. When 2≤i≤3, in the first formula, the second parameter outputted through the i^{th} judgment is obtained on the basis of the second parameter obtained through the (i-1)^{th} judgment, and in the second formula, the second parameter outputted through the i^{th} judgment is obtained on the basis of the second parameter obtained through the (i-1)^{th} judgment, where s is a constant greater than 0.

For example, when n is greater than the predetermined value, the second parameter outputted through the i^{th} judgment is calculated through a third formula t = t - 0.5*ⁱ*, and when n is smaller than the predetermined value, the second parameter outputted through the i^{th} judgment is calculated through a fourth formula t = t + 0.5*ⁱ*. When i=1, in the third formula, the second parameter outputted through the first judgment is obtained on the basis of the initial second parameter, and in the fourth formula, the second parameter outputted through the first judgment is obtained on the basis of the initial second parameter. When 2≤i≤3, in the third formula, the second parameter outputted through the i^{th} judgment is obtained on the basis of the second parameter obtained through the (i-1)^{th} judgment, and in the fourth formula, the second parameter outputted through the i^{th} judgment is obtained on the basis of the second parameter obtained through the (i-1)^{th} judgment.

In the above-mentioned formulae, when s=0.5, a better encoding/decoding effect is obtained. However, in actual use, s may have any other values.

In some embodiments of the present disclosure, when i=1, t=1 through initialization. For each channel of the feature image, the actual symbol range for the channel is compared with the channel-adaptive priori codebook range, and n is obtained in accordance with a comparison result.

For example, an actual symbol range for a first channel is compared with a channel-adaptive priori codebook range for the first channel, so as to determine whether the actual symbol range for the first channel exceeds t times of the channel-adaptive priori codebook range for the first channel. At this time, t=1. When the actual symbol range for the first channel exceeds t times of the channel-adaptive priori codebook range for the first channel, n=1. An actual symbol range for a second channel is compared with a channel-adaptive priori codebook range for the second channel, so as to determine whether the actual symbol range for the second channel exceeds t times of the channel-adaptive priori codebook range for the second channel. At this time, t=1. When the actual symbol range for the second channel exceeds t times of the channel-adaptive priori codebook range for the second channel, a value of n is incremented by 1; otherwise, the value of n remains unchanged. All the channels are judged so as to obtain a final value of n. When n>20, t is calculated through the first formula for the subsequent processing. When n<20, t is calculated through the second formula for the subsequent processing. When n=20, the cycle is ended, and at this time, t=1 and n=20.

When i=2, a value of t is equal to a value calculated in the case of i=1. The actual symbol range for the first channel is compared with the channel-adaptive priori codebook range for the first channel, so as to determine whether the actual symbol range for the first channel exceeds t times of the channel-adaptive priori codebook range for the first channel. When the actual symbol range for the first channel exceeds t times of the channel-adaptive priori codebook range for the first channel, n=1. The actual symbol range for the second channel is compared with the channel-adaptive priori codebook range for the second channel, so as to determine whether the actual symbol range for the second channel exceeds t times of the channel-adaptive priori codebook range for the second channel. When the actual symbol range for the second channel exceeds t times of the channel-adaptive priori codebook range for the second channel, a value of n is incremented by 1; otherwise, the value of n remains unchanged. All the channels are judged so as to obtain a final value of n. When n>20, t is calculated through the first formula for the subsequent processing. When n<20, t is calculated through the second formula for the subsequent processing. When n=20, the cycle is ended, and at this time, the value of t and n=20 are obtained as mentioned hereinabove.

When i=3, a value of t is equal to a value calculated in the case of i=2. The actual symbol rang for the first channel is compared with the channel-adaptive priori codebook range for the first channel, so as to determine whether the actual symbol range for the first channel exceeds t times of the channel-adaptive priori codebook range for the first channel. When the actual symbol range for the first channel exceeds t times of the channel-adaptive priori codebook range for the first channel, n=1. The actual symbol range for the second channel is compared with the channel-adaptive priori codebook range for the second channel, so as to determine whether the actual symbol range for the second channel exceeds t times of the channel-adaptive priori codebook range for the second channel. When the actual symbol range for the second channel exceeds t times of the channel-adaptive priori codebook range for the second channel, a value of n is incremented by 1; otherwise, the value of n remains unchanged. All the channels are judged so as to obtain a final value of n. When n>20, t is calculated through the first formula for the subsequent processing. When n<20, t is calculated through the second formula for the subsequent processing. When n=20, the cycle is ended, and at this time, the value of t and n=20 are obtained as mentioned hereinabove.

The values of t and n are obtained as mentioned hereinabove. The value of t obtained through the last judgment is taken as the codebook range scaling factor, and the value of n is taken as a value of a third parameter Q.

Alternatively, in actual use, for the i^{th} judgment, when n is greater than the predetermined value, a certain value is reduced from the second parameter obtained through the (i-1)^{th} judgment or the initial second parameter, and this value is set according to the practical need. For the i^{th} judgment, when n is smaller than the predetermined value, a certain value is added to the second parameter obtained through the (i-1)^{th} judgment or the initial second parameter, and this value is also set according to the practical need. In addition, the values added or reduced in different judgments may be the same or different from each other. For example, when values need to be added to the second parameter in the first judgment and the second judgment, the value added in the first judgment may be the same as, or different from, the value added in the second judgment.

Step 103: obtaining a content-adaptive priori codebook range for each channel of the feature image in accordance with the codebook range scaling factor and a channel-adaptive priori codebook range for each channel.

For example, a maximum value and a minimum value in the channel-adaptive priori codebook range for each channel are multiplied by the codebook range scaling factor respectively, so as to obtain a scaled maximum value and a scaled minimum value. Then, the content-adaptive priori codebook range for each channel of the feature image is formed in accordance with the scaled maximum value and the scaled minimum value.

Step 104: performing entropy encoding on a target channel in accordance with an actual symbol range for the target channel of the feature image and a content-adaptive priori codebook range for the target channel, so as to form an encoded stream. The target channel is any channel of the feature image.

In this step, on the basis of an order of channels, the entropy encoding is performed on the target channel in accordance with a relationship between the actual symbol range for the target channel of the feature image and the content-adaptive priori codebook range for the target channel. (1) When the content-adaptive priori codebook range for the target channel is 0, the entropy encoding is not performed on the target channel. (2) When the actual symbol range for the target channel is smaller than or equal to the content-adaptive priori codebook range, the entropy encoding is performed on the target channel using the content-adaptive priori codebook range or in the content-adaptive priori codebook range. (3) When the actual symbol range for the target channel is greater than the content-adaptive priori codebook range, the entropy encoding is performed on the target channel using the actual symbol range for the target channel.

In this case, information indicating that the actual symbol range for the target channel exceeds the content-adaptive priori codebook range further needs to be notified to the decoding end, e.g., an index of a channel, and a maximum value and a minimum value of an actual symbol range for the channel. When the maximum value and the minimum value of a certain channel both exceed the content-adaptive priori codebook range, the information needs to include two indices of the channel, one of which indicates the maximum value and the other of which indicates the minimum value.

Based on the above description, in the embodiments of the present disclosure, the encoded stream includes any one of the followings.
(1) The codebook range scaling factor and a third parameter Q corresponding to the codebook range scaling factor, where Q=0. In other words, in this case, the actual symbol range for each channel is within the content-adaptive priori codebook range for the channel.
(2) The codebook range scaling factor, the third parameter Q corresponding to the codebook range scaling factor (Q is an integer greater than 0), and indication information for indicating information about a first channel. An actual symbol range for the first channel is greater than the content-adaptive priori codebook range for the first channel.

The third parameter is used to indicate the quantity of channels in the feature image for which the actual symbol range is greater than T times of the corresponding channel-adaptive priori codebook range, where T represents the codebook range scaling factor, and T is greater than or equal to 1. The information about the first channel includes an index of the first channel, a maximum value and/or a minimum value of the actual symbol range, etc.

According to the embodiments of the present disclosure, at the encoding end, the codebook range scaling factor is obtained in accordance with the feature image of the to-be-encoded image, and the content-adaptive priori codebook range for each channel of the feature image is obtained in accordance with the codebook range scaling factor and the channel-adaptive priori codebook range for each channel, so as to form the encoded stream. The content-adaptive priori codebook range is obtained through scaling the channel-adaptive priori codebook range for each channel, so when encoding each channel, each channel is encoded using a codebook range adapted to the channel, so it is able to increase an encoding speed.

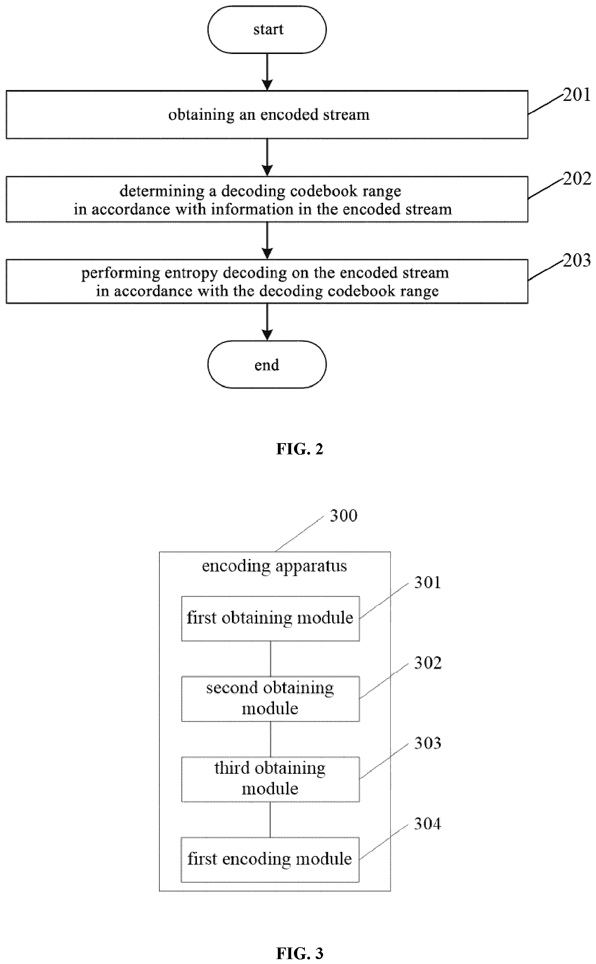

As shown in FIG. 2, the present disclosure further provides in some embodiments a decoding method, which includes: Step 201 of obtaining an encoded stream; Step 202 of determining a decoding codebook range in accordance with information in the encoded stream; and Step 203 of performing entropy decoding on the encoded stream in accordance with the decoding codebook range.

The decoding codebook range includes an actual symbol range for a channel or a content-adaptive priori codebook range for the channel. In actual use, the decoding is performed in accordance with an order of channels in conjunction with the above-mentioned information.

As mentioned hereinabove, the encoded stream includes any one of: (1) the codebook range scaling factor and the third parameter Q corresponding to the codebook range scaling factor, where Q=0; or (2) the codebook range scaling factor, the third parameter Q corresponding to the codebook range scaling factor (Q is an integer greater than 0), and the indication information for indicating information about a first channel. An actual symbol range for the first channel is greater than a content-adaptive priori codebook range for the first channel. The third parameter is used to indicate the quantity of channels in the feature image for which the actual symbol range is greater than T times of the corresponding channel-adaptive priori codebook range, where T represents the codebook range scaling factor, and T is greater than or equal to 1. The information about the first channel includes an index of the first channel, a maximum value and/or a minimum value of the actual symbol range, etc.

With respect to the above-mentioned two cases, the decoding codebook range is determined in different ways.
(1) When the encoded stream includes the codebook range scaling factor and the third parameter Q corresponding to the codebook range scaling factor, and Q=0, the actual symbol range for each channel is within the content-adaptive priori codebook range for the channel, so the maximum value and the minimum value of the channel-adaptive priori codebook range for each channel are multiplied by the codebook range scaling factor respectively, so as to obtain a scaled maximum value and a scaled minimum value, and then the content-adaptive priori codebook range for each channel is formed in accordance with the scaled maximum value and the scaled minimum value.
   In this case, when a content-adaptive priori codebook range for a target channel is 0, the target channel is decoded as 0. When the content-adaptive priori codebook range for the target channel is not 0, the target channel is decoded in accordance with the content-adaptive priori codebook range for the target channel. The target channel is any one of the channels.
(2) When the encoded stream includes the codebook range scaling factor, the third parameter Q corresponding to the codebook range scaling factor, and the indication information, a channel for which the actual symbol range is greater than T times of the corresponding channel-adaptive priori codebook range, i.e., the first channel, and a second channel (a channel other than the first channel) need to be determined. Then, with respect to different types of channels, a corresponding decoding codebook is determined for the subsequent decoding.

For example, the decoding codebook range is determined as follows.
(1) The maximum value and the minimum value of the channel-adaptive priori codebook range for each channel are multiplied by the codebook range scaling factor respectively, so as to obtain the scaled maximum value and the scaled minimum value.
(2) The actual symbol range for the first channel is determined in accordance with the first parameter and the indication information, and taken as a decoding codebook range for the first channel.

A position of the indication information in the encoded stream is determined in accordance with a position of the first parameter. Next, the indication information is read to obtain the information about the first channel, e.g., the index, the maximum value and/or the minimum value, and the first channel is determined in accordance with the index. Then, the actual symbol range for the first channel is determined. To be specific, when the indication information includes the maximum value of the actual symbol range for the first channel, the actual symbol range for the first channel is formed in accordance with the maximum value and the scaled minimum value of the actual symbol range for the first channel. When the indication information includes the minimum value of the actual symbol range for the first channel, the actual symbol range for the first channel is formed in accordance with the scaled maximum value and the minimum value of the actual symbol range for the first channel. When the indication information includes the maximum value and the minimum value of the actual symbol range for the first channel, the actual symbol range for the first channel is formed in accordance with the maximum value and the minimum value of the actual symbol range for the first channel.

In other words, in the above process, the scaled maximum value and/or the scaled minimum value obtained in (1) are updated in accordance with the maximum value and/or the minimum value in the indication information.

The first channel is decoded in accordance with the actual symbol range for the first channel.

(3) A content-adaptive priori codebook range for a second channel is formed in accordance with the scaled maximum value and the scaled minimum value, and taken as a decoding codebook range for the second channel. The second channel is a channel other than the first channel.

There is no strict sequential order between (1) and (2). When an index of a certain channel is not included in the indication information, this channel is considered as the second channel.

The second channel is decoded in accordance with the content-adaptive priori codebook range for the second channel.

For example, when the content-adaptive priori codebook range for the second channel is 0, the second channel is decoded as 0. When the content-adaptive priori codebook range for the second channel is not 0, the second channel is decoded in accordance with the content-adaptive priori codebook range for the second channel.

In the embodiments of the present disclosure, the channel-adaptive priori codebook range for each channel is obtained in advance or during the execution. The channel-adaptive priori codebook range for each channel is consistent with that at the encoding end, so as to achieve information synchronization between the encoding end and the decoding end.

For example, pre-experiment is performed on a fully-connected neural network model at each code rate using a training set having a certain size (e.g., 800 training images each having a size of 256*256), and a maximum value and a minimum value of symbols in the training sets for each channel of the model are obtained through traversing, so as to obtain the channel-adaptive priori codebook range for each channel.

According to the embodiments of the present disclosure, at the encoding end, the codebook range scaling factor is obtained in accordance with the feature image of the to-be-encoded image, and the content-adaptive priori codebook range for each channel of the feature image is obtained in accordance with the codebook range scaling factor and the channel-adaptive priori codebook range for each channel, so as to form the encoded stream. The content-adaptive priori codebook range is obtained through scaling the channel-adaptive priori codebook range for each channel, so when encoding each channel, each channel is encoded using a codebook range adapted to the channel, so it is able to increase an encoding speed. Correspondingly, at the decoding end, the decoding codebook range is determined, and each channel is decoded in accordance with the actual symbol range for the channel or the content-adaptive priori codebook range for the channel, so it is able to increase a decoding speed.

As compared with the other entropy encoder/decoder for image encoding through the fully-connected neural network, e.g., an entropy encoder/decoder NIC-0.3, through the scheme in the embodiments of the present disclosure, it is able to achieve entropy encoding in a content-adaptive and channel-adaptive manner, thereby to improve the encoding/decoding efficiency, with the rate distortion performance being acceptable. Due to the introduction of a new entropy encoding/decoding algorithm, it is able to remarkably increase the encoding speed and the decoding speed. An encoding time is reduced by 51% (averaging on a Kodak testing set, the same below), a decoding time is reduced by 47%, and a rate distortion loss is merely 0.8%.

The present disclosure further provides in some embodiments an encoding apparatus, as shown in FIG. 3. A principle of the encoding apparatus for solving the problem is similar to that of the encoding method, so the implementation of the encoding device may refer to that of the encoding method, which will not be particularly defined herein.

As shown in FIG. 3, the encoding apparatus 300 includes: a first obtaining module 301 configured to obtain a feature image of a to-be-encoded image; a second obtaining module 302 configured to obtain a codebook range scaling factor in accordance with the feature image; a third obtaining module 303 configured to obtain a content-adaptive priori codebook range for each channel of the feature image in accordance with the codebook range scaling factor and a channel-adaptive priori codebook range for each channel; and a first encoding module 304 configured to perform entropy encoding on a target channel in accordance with an actual symbol range for the target channel of the feature image and a content-adaptive priori codebook range for the target channel, so as to form an encoded stream. The target channel is any channel of the feature image.

In some embodiments of the present disclosure, the first obtaining module 301 includes: a splitting sub-module configured to split the to-be-encoded image into a plurality of sub-blocks each having a size of M*N, M and N being a length and a width of each sub-block respectively, and M and N being greater than 0; and a processing sub-module configured to input the sub-blocks into an encoding sub-network to obtain the feature image.

In some embodiments of the present disclosure, the first obtaining module 301 further includes a completion sub-module configured to, when there are remaining pixels after the to-be-encoded image is split into the plurality of sub-blocks each having a size of M*N, complete the remaining pixel with zeros, so as to obtain completed sub-blocks, a length and a width of each completed sub-block are multiples of 64, and the processing sub-module is further configured to input the plurality of sub-blocks each having a size of M*N and the completed sub-blocks into the encoding sub-network so as to obtain the feature image.

In some embodiments of the present disclosure, the second obtaining module 302 is configured to: (S1) for an i^{th} judgment, compare an actual symbol range for each channel of the feature image with t times of the channel-adaptive priori codebook range, so as to obtain a first parameter n in accordance with a comparison result, n being the quantity of channels for which the actual symbol range is greater than t times of the corresponding channel-adaptive priori codebook range in the feature image, and t being a second parameter; (S2) when n is greater than a predetermined value, reduce a second parameter obtained through an (i-1)^{th} judgment or an initial second parameter so as to obtain a second parameter outputted through the i^{th} judgment, and when n is smaller than the predetermined value, increase the second parameter obtained through the (i-1)^{th} judgment or the initial second parameter, so as to obtain the second parameter outputted through the i^{th} judgment; and when a judgment ending condition is not satisfied, increment a value of i by 1, repeat S1 to S2 until the judgment ending condition is satisfied, and take the second parameter obtained through a last judgment as the codebook range scaling factor, where i is a serial number of a current judgment, i is an integer and has an initial value of 1, and when i=1, t=1. The judgment ending condition includes that the first parameter obtained through the i^{th} judgment is equal to the predetermined value, or i is greater than 3.

In some embodiments of the present disclosure, the second obtaining module 302 is configured to, in S2, when n is greater than the predetermined value, calculate the second parameter obtained through the i^{th} judgment using a first formula t = t - *s¹,* and when n is smaller than the predetermined value, calculate the second parameter obtained through the i^{th} judgment using a second formula t = t + *sⁱ*. When i=1, in the first formula, the second parameter outputted through a first judgment is obtained on the basis of the initial second parameter, and in the second formula, the second parameter outputted through the first judgment is obtained on the basis of the initial second parameter. When 2≤i≤3, in the first formula, the second parameter outputted through the i^{th} judgment is obtained on the basis of the second parameter obtained through the (i-1)^{th} judgment, and in the second formula, the second parameter outputted through the i^{th} judgment is obtained on the basis of the second parameter obtained through the (i-1)^{th} judgment, where s is a constant greater than 0.

In some embodiments of the present disclosure, the third obtaining module 303 is configured to multiply a maximum value and a minimum value of the channel-adaptive priori codebook range for each channel by the codebook range scaling factor so as to obtain a scaled maximum value and a scaled minimum value, and form the content-adaptive priori codebook range for each channel of the feature image in accordance with the scaled maximum value and the scaled minimum value.

In some embodiments of the present disclosure, the first encoding module 304 includes: a first encoding sub-module configured to, when the content-adaptive priori codebook range for the target channel is 0, not perform entropy encoding on the target channel; a second encoding sub-module configured to, when the actual symbol range for the target channel is smaller than or equal to the content-adaptive priori codebook range, perform entropy encoding on the target channel in accordance with the content-adaptive priori codebook range or within the content-adaptive priori codebook range; and a third encoding sub-module configured to, when the actual symbol range for the target channel is greater than the content-adaptive priori codebook range, perform entropy encoding on the target channel in accordance with the actual symbol range for the target channel.

In some embodiments of the present disclosure, the encoded stream includes any one of: the codebook range scaling factor and a third parameter Q corresponding to the codebook range scaling factor, where Q=0; or the codebook range scaling factor, the third parameter Q corresponding to the codebook range scaling factor, and indication information, where Q is an integer greater than 0. The indication information is used to indicate information about a first channel, an actual symbol range for the first channel is greater than a content-adaptive priori codebook range for the first channel, and the third parameter is used to indicate the quantity of channels in the feature image whose actual symbol range is greater than T times of the corresponding channel-adaptive priori codebook range, where T is the codebook range scaling parameter, and T is greater than or equal to 1.

In some embodiments of the present disclosure, the encoding apparatus further includes a fifth obtaining module configured to obtain the channel-adaptive priori codebook range for each channel.

The encoding apparatus 300 in the embodiments of the present disclosure is used to implement the above-mentioned encoding method with a similar principle and a similar technical effect, which will not be particularly defined herein.

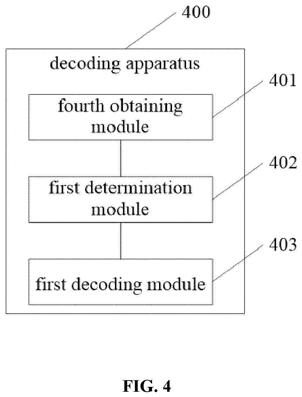

The present disclosure further provides in some embodiments a decoding apparatus, as shown in FIG. 4. A principle of the decoding apparatus for solving the problem is similar to that of the decoding method, so the implementation of the decoding apparatus may refer to that of the decoding method, which will not be particularly defined herein.

As shown in FIG. 4, the decoding apparatus 400 includes: a fourth obtaining module 401 configured to obtain an encoded stream; a first determination module 402 configured to determine a decoding codebook range in accordance with information in the encoded stream; and a first decoding module 403 configured to perform entropy decoding on the encoded stream in accordance with the decoding codebook range. The decoding codebook range includes an actual symbol range for a channel or a content-adaptive priori codebook range for the channel.

In some embodiments of the present disclosure, the encoded stream includes any one of: a codebook range scaling factor and a third parameter Q corresponding to the codebook range scaling factor, where Q=0; or the codebook range scaling factor, the third parameter Q corresponding to the codebook range scaling factor, and indication information, where Q is an integer greater than 0. The indication information is used to indicate information about a first channel, an actual symbol range for the first channel is greater than a content-adaptive priori codebook range for the first channel, and the third parameter is used to indicate the quantity of channels in the feature image whose actual symbol range is greater than T times of a corresponding channel-adaptive priori codebook range, where T is the codebook range scaling parameter, and T is greater than or equal to 1.

In some embodiments of the present disclosure, when the encoded stream includes the codebook range scaling factor and the third parameter Q corresponding to the codebook range scaling factor, and Q=0, the first determination module 402 is further configured to multiply a maximum value and a minimum value of the channel-adaptive priori codebook range for each channel by the codebook range scaling factor respectively, so as to obtain a scaled maximum value and a scaled minimum value, and form the content-adaptive priori codebook range for each channel in accordance with the scaled maximum value and the scaled minimum value.

In some embodiments of the present disclosure, the first decoding module 403 is further configured to: when the content-adaptive priori codebook range for a target channel is 0, decode the target channel as 0; and when the content-adaptive priori codebook range for the target channel is not 0, decode the target channel in accordance with the content-adaptive priori codebook range for the target channel. The target channel is any channel.

In some embodiments of the present disclosure, when the encoded stream includes the codebook range scaling factor, the third parameter Q corresponding to the codebook range scaling factor and the indication information, the first determination module 402 includes: a first obtaining sub-module configured to multiply a maximum value and a minimum value of a channel-adaptive priori codebook range for each channel by the codebook range scaling factor respectively, so as to obtain a scaled maximum value and a scaled minimum value; a first determination sub-module configured to determine an actual symbol range for a first channel in accordance with the first parameter and the indication information, and take the actual symbol range for the first channel as a decoding codebook range for the first channel; and a second determination sub-module configured to form a content-adaptive priori codebook range for a second channel in accordance with the scaled maximum value and the scaled minimum value, and take the content-adaptive priori codebook range for the second channel as a decoding codebook range for the second channel. The second channel is a channel other than the first channel.

In some embodiments of the present disclosure, the first determination sub-module is configured to: when the indication information includes a maximum value of the actual symbol range for the first channel, form the actual symbol range for the first channel in accordance with the maximum value and a scaled minimum value of the actual symbol range for the first channel; when the indication information includes a minimum value of the actual symbol range for the first channel, form the actual symbol range for the first channel in accordance with a scaled maximum value and the minimum value of the actual symbol range for the first channel; and when the indication information includes the maximum value and the minimum value of the actual symbol range for the first channel, form the actual symbol range for the first channel in accordance with the maximum value and the minimum value of the actual symbol range for the first channel.

In some embodiments of the present disclosure, the first decoding module 403 includes: a first decoding sub-module configured to decode the first channel in accordance with the actual symbol range for the first channel; and a second decoding sub-module configured to decode the second channel in accordance with the content-adaptive priori codebook range for the second channel.

In some embodiments of the present disclosure, the second decoding sub-module is configured to: when the content-adaptive priori codebook range for the second channel is 0, decode the second channel as 0; and when the content-adaptive priori codebook range for the second channel is not 0, decode the second channel in accordance with the content-adaptive priori codebook range for the second channel.

The decoding apparatus 400 in the embodiments of the present disclosure is used to implement the above-mentioned decoding method with a similar principle and a similar technical effect, which will not be particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disc, a mobile hard disc (HD), a read-only memory (ROM), a random access memory (RAM), a magnetic disc or an optical disc.

The present disclosure further provides in some embodiments an electronic device, which includes a transceiver, a memory, a processor, and a program stored in the memory and the executed by the processor. The processor is configured to execute the program so as to implement the above-mentioned encoding method or decoding method.

The present disclosure further provides in some embodiments a readable storage medium storing therein a program. The program is executed by a processor so as to implement the above-mentioned encoding method or decoding method with a same technical effect, which will not be particularly defined herein. The readable storage medium may be any available medium or data storage device capable of being accessed by the processor, which includes, but not limited to, a magnetic memory (e.g., floppy disc, hard disc, magnetic tape, or Magnetic Optical (MO) disc), an optical memory (e.g., Compact Disc (CD), Digital Video Disc (DVD), Blue-ray Disc (BD), or High-definition Versatile Disc (HVD)), or a semiconductor memory (e.g., ROM, Electrically Programmable ROM (EPROM), Electrically Erasable PROM (EEPROM), NAND flash, or Solid-State Disc (SSD)).

It should be appreciated that, such words as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the present disclosure may be implemented by software as well as a necessary common hardware platform, or by hardware, and the former may be better in most cases. Based on this, the technical solutions of the present disclosure, partial or full, or parts of the technical solutions of the present disclosure contributing to the related art, may appear in the form of software products, which may be stored in a storage medium (e.g., ROM/RAM, magnetic disk or optical disk) and include several instructions so as to enable a terminal device (mobile phone, computer, server, air conditioner or network device) to execute the method in the embodiments of the present disclosure.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

### Industrial Applicability

The present disclosure provides the encoding method, the encoding apparatus, the decoding method, the decoding apparatus, the device and the readable storage medium, and it relates to the field of communication technology, so as to increase an encoding speed and a decoding speed. The encoding method includes: obtaining a feature image of a to-be-encoded image; obtaining a codebook range scaling factor in accordance with the feature image; obtaining a content-adaptive priori codebook range for each channel of the feature image in accordance with the codebook range scaling factor and a channel-adaptive priori codebook range for each channel; and performing entropy encoding on a target channel in accordance with an actual symbol range for the target channel of the feature image and a content-adaptive priori codebook range for the target channel, so as to form an encoded stream. The target channel is any channel of the feature image.

## Claims

1. An encoding method, comprising:
obtaining a feature image of a to-be-encoded image;
obtaining a codebook range scaling factor in accordance with the feature image;
obtaining a content-adaptive priori codebook range for each channel of the feature image in accordance with the codebook range scaling factor and a channel-adaptive priori codebook range for each channel; and
performing entropy encoding on a target channel in accordance with an actual symbol range for the target channel of the feature image and a content-adaptive priori codebook range for the target channel, so as to form an encoded stream,
wherein the target channel is any channel of the feature image.

2. The encoding method according to claim 1, wherein the obtaining the feature image of the to-be-encoded image comprises:
splitting the to-be-encoded image into a plurality of sub-blocks each having a size of M*N, M and N being a length and a width of each sub-block respectively, and M and N being greater than 0; and
inputting the sub-blocks into an encoding sub-network to obtain the feature image.

3. The encoding method according to claim 2, wherein prior to inputting the sub-blocks into the encoding sub-network to obtain the feature image, the encoding method further comprises, when there are remaining pixels after the to-be-encoded image is split into the plurality of sub-blocks each having a size of M*N, completing the remaining pixel with zeros, so as to obtain completed sub-blocks, a length and a width of each completed sub-block are multiples of 64,
wherein the inputting the sub-blocks into the encoding sub-network to obtain the feature image comprises inputting the plurality of sub-blocks each having a size of M*N and the completed sub-blocks into the encoding sub-network so as to obtain the feature image.

4. The encoding method according to claim 1, wherein the obtaining the codebook range scaling factor in accordance with the feature image comprises:
(S1) for an i^{th} judgment, comparing an actual symbol range for each channel of the feature image with t times of the channel-adaptive priori codebook range, so as to obtain a first parameter n in accordance with a comparison result, n being the quantity of channels for which the actual symbol range is greater than t times of the corresponding channel-adaptive priori codebook range in the feature image, and t being a second parameter;
(S2) when n is greater than a predetermined value, reducing a second parameter obtained through an (i-1)^{th} judgment or an initial second parameter so as to obtain a second parameter outputted through the i^{th} judgment, and when n is smaller than the predetermined value, increasing the second parameter obtained through the (i-1)^{th} judgment or the initial second parameter, so as to obtain the second parameter outputted through the i^{th} judgment; and
when a judgment ending condition is not satisfied, incrementing a value of i by 1, repeating (S1) to (S2) until the judgment ending condition is satisfied, and taking the second parameter obtained through a last judgment as the codebook range scaling factor, where i is a serial number of a current judgment, i is an integer and has an initial value of 1, and when i=1, t=1, the judgment ending condition comprises that the first parameter obtained through the i^{th} judgment is equal to the predetermined value, or i is greater than 3.

5. The encoding method according to claim 4, wherein in (S2), when n is greater than the predetermined value, calculate the second parameter obtained through the i^{th} judgment using a first formula t = t - *sⁱ*, and when n is smaller than the predetermined value, calculate the second parameter obtained through the i^{th} judgment using a second formula t = t + *sⁱ*,
wherein when i=1, in the first formula, the second parameter outputted through a first judgment is obtained on the basis of the initial second parameter, and in the second formula, the second parameter outputted through the first judgment is obtained on the basis of the initial second parameter,
wherein when 2≤i≤3, in the first formula, the second parameter outputted through the i^{th} judgment is obtained on the basis of the second parameter obtained through the (i-1)^{th} judgment, and in the second formula, the second parameter outputted through the i^{th} judgment is obtained on the basis of the second parameter obtained through the (i-1)^{th} judgment, where s is a constant greater than 0.

6. The encoding method according to claim 1, wherein the obtaining the content-adaptive priori codebook range for each channel of the feature image in accordance with the codebook range scaling factor and the channel-adaptive priori codebook range for each channel comprises:
multiplying a maximum value and a minimum value of the channel-adaptive priori codebook range for each channel by the codebook range scaling factor so as to obtain a scaled maximum value and a scaled minimum value, and forming the content-adaptive priori codebook range for each channel of the feature image in accordance with the scaled maximum value and the scaled minimum value.

7. The encoding method according to claim 1, wherein the performing entropy encoding on the target channel in accordance with the actual symbol range for the target channel of the feature image and the content-adaptive priori codebook range for the target channel comprises:
when the content-adaptive priori codebook range for the target channel is 0, not performing entropy encoding on the target channel;
when the actual symbol range for the target channel is smaller than or equal to the content-adaptive priori codebook range, performing entropy encoding on the target channel in accordance with the content-adaptive priori codebook range or within the content-adaptive priori codebook range;
when the actual symbol range for the target channel is greater than the content-adaptive priori codebook range, performing entropy encoding on the target channel in accordance with the actual symbol range for the target channel.

8. The encoding method according to claim 1, wherein the encoded stream comprises any one of:
the codebook range scaling factor and a third parameter Q corresponding to the codebook range scaling factor, where Q=0; or
the codebook range scaling factor, the third parameter Q corresponding to the codebook range scaling factor, and indication information, where Q is an integer greater than 0,
wherein the indication information is used to indicate information about a first channel, an actual symbol range for the first channel is greater than a content-adaptive priori codebook range for the first channel, and the third parameter is used to indicate the quantity of channels in the feature image whose actual symbol range is greater than T times of the corresponding channel-adaptive priori codebook range, where T is the codebook range scaling parameter, and T is greater than or equal to 1.

9. The encoding method according to claim 8, wherein the indication information comprises an index of the first channel, and a maximum value and/or a minimum value of the actual symbol range for the first channel.

10. The encoding method according to any one of claims 1 to 9, further comprising obtaining the channel-adaptive priori codebook range for each channel.

11. A decoding method, comprising:
obtaining an encoded stream;
determining a decoding codebook range in accordance with information in the encoded stream; and
performing entropy decoding on the encoded stream in accordance with the decoding codebook range,
wherein the decoding codebook range comprises an actual symbol range for a channel or a content-adaptive priori codebook range for the channel.

12. The decoding method according to claim 11, wherein the encoded stream comprises any one of:
a codebook range scaling factor and a third parameter Q corresponding to the codebook range scaling factor, where Q=0; or
the codebook range scaling factor, the third parameter Q corresponding to the codebook range scaling factor, and indication information, where Q is an integer greater than 0,
wherein the indication information is used to indicate information about a first channel, an actual symbol range for the first channel is greater than a content-adaptive priori codebook range for the first channel, and the third parameter is used to indicate the quantity of channels in the feature image whose actual symbol range is greater than T times of a corresponding channel-adaptive priori codebook range, where T is the codebook range scaling parameter, and T is greater than or equal to 1.

13. The decoding method according to claim 12, wherein when the encoded stream comprises the codebook range scaling factor and the third parameter Q corresponding to the codebook range scaling factor, and Q=0, the determining the decoding codebook range in accordance with the information in the encoded stream comprises:
multiplying a maximum value and a minimum value of the channel-adaptive priori codebook range for each channel by the codebook range scaling factor so as to obtain a scaled maximum value and a scaled minimum value, and forming the content-adaptive priori codebook range for each channel in accordance with the scaled maximum value and the scaled minimum value.

14. The decoding method according to claim 13, wherein the performing entropy decoding on the encoded stream in accordance with the decoding codebook range comprises:
when the content-adaptive priori codebook range for a target channel is 0, decoding the target channel as 0; and
when the content-adaptive priori codebook range for the target channel is not 0, decoding the target channel in accordance with the content-adaptive priori codebook range for the target channel,
wherein the target channel is any channel.

15. The decoding method according to claim 12, wherein when the encoded stream comprises the codebook range scaling factor, the third parameter Q corresponding to the codebook range scaling factor and the indication information, the determining the decoding codebook range in accordance with the information in the encoded stream comprises:
multiplying a maximum value and a minimum value of a channel-adaptive priori codebook range for each channel by the codebook range scaling factor, so as to obtain a scaled maximum value and a scaled minimum value;
determining an actual symbol range for a first channel in accordance with the first parameter and the indication information, and take the actual symbol range for the first channel as a decoding codebook range for the first channel; and
forming a content-adaptive priori codebook range for a second channel in accordance with the scaled maximum value and the scaled minimum value, and take the content-adaptive priori codebook range for the second channel as a decoding codebook range for the second channel,
wherein the second channel is a channel other than the first channel.

16. The decoding method according to claim 15, wherein the determining the actual symbol range for the first channel in accordance with the first parameter and the indication information comprises:
when the indication information comprises a maximum value of the actual symbol range for the first channel, forming the actual symbol range for the first channel in accordance with the maximum value and a scaled minimum value of the actual symbol range for the first channel;
when the indication information comprises a minimum value of the actual symbol range for the first channel, forming the actual symbol range for the first channel in accordance with a scaled maximum value and the minimum value of the actual symbol range for the first channel; and
when the indication information comprises the maximum value and the minimum value of the actual symbol range for the first channel, forming the actual symbol range for the first channel in accordance with the maximum value and the minimum value of the actual symbol range for the first channel.

17. The decoding method according to claim 15, wherein the performing entropy decoding on the encoded stream in accordance with the decoding codebook range comprises:
decoding the first channel in accordance with the actual symbol range for the first channel; and
decoding the second channel in accordance with the content-adaptive priori codebook range for the second channel.

18. The decoding method according to claim 17, wherein the decoding the second channel in accordance with the content-adaptive priori codebook range for the second channel comprises:
when the content-adaptive priori codebook range for the second channel is 0, decoding the second channel as 0; and
when the content-adaptive priori codebook range for the second channel is not 0, decoding the second channel in accordance with the content-adaptive priori codebook range for the second channel.

19. An encoding apparatus, comprising:
a first obtaining module configured to obtain a feature image of a to-be-encoded image;
a second obtaining module configured to obtain a codebook range scaling factor in accordance with the feature image;
a third obtaining module configured to obtain a content-adaptive priori codebook range for each channel of the feature image in accordance with the codebook range scaling factor and a channel-adaptive priori codebook range for each channel; and
a first encoding module configured to perform entropy encoding on a target channel in accordance with an actual symbol range for the target channel of the feature image and a content-adaptive priori codebook range for the target channel, so as to form an encoded stream,
wherein the target channel is any channel of the feature image.

20. A decoding apparatus, comprising:
a fourth obtaining module configured to obtain an encoded stream;
a first determination module configured to determine a decoding codebook range in accordance with information in the encoded stream; and
a first decoding module configured to perform entropy decoding on the encoded stream in accordance with the decoding codebook range,
wherein the decoding codebook range comprises an actual symbol range for a channel or a content-adaptive priori codebook range for the channel.

21. An electronic device, comprising a memory, a processor, and a program stored in the memory and executed by the processor, wherein the processor is configured to read the program in the memory so as to implement the encoding method according to any one of claims 1 to 10, or the decoding method according to any one of claims 11 to 18.

22. A readable storage medium storing therein a program, wherein the program is executed by a processor, so as to implement the encoding method according to any one of claims 1 to 10, or the decoding method according to any one of claims 11 to 18.
